# EUROPEAN PATENT SPECIFICATION

(11) **EP 0 654 777 B1**
(45) Date of publication and mention of the grant of the patent: **24.02.1999**
(21) Application number: 94118422.8
(22) Date of filing: 23.11.1994
(51) Int. Cl.: G09G 3/34, G09G 3/20, G09G 3/36

(54) **Brightness and contrast control for a digital pulse-width modulated display system**
Helligkeit und Kontrastkontrolle für eine Anzeigeeinrichtung mit digitaler Pulsbreitenmodulation
Contrôle de luminosité et de contraste pour un système d'affichage avec modulation numérique de la largeur d'impulsion

(43) Date of publication of application: 24.05.1995
(73) Proprietor: TEXAS INSTRUMENTS INCORPORATED, Dallas Texas 75265 (US)
(72) Inventor: Urbanus, Paul M., Dallas, TX 75248 (US); Gove, Robert J., Plano, TX 75075 (US)
(74) Representative: Schwepfinger, Karl-Heinz, Dipl.-Ing.

(56) References cited:
- EP-A- 0 467 048
- WO-A-92/12506

## Description

### FIELD OF THE INVENTION

This invention relates to the field of visual display systems, more particularly, to digital pulse-width modulated display systems.

### BACKGROUND OF THE INVENTION

Display systems have long given viewers the capability to adjust display characteristics in order to adapt to ambient conditions, adjust for poor quality input signals, compensate for an aging display device, or to suit personal preferences. Two of the primary means for adjustment have been the brightness control and the contrast control.

The brightness control theoretically adjusts the brightness or intensity of the display by changing the amount of light emitted, reflected or transmitted by the display. The contrast control adjusts the brightness ratio between light and dark areas of the screen. Typically both the brightness and contrast adjustments are implemented by changing either the gain or offset characteristics, or both the gain and offset characteristics, of the image signal path.

Implementation of brightness and contrast controls in an all digital image display system can be difficult. Typically this involves additional hardware such as multipliers or lookup tables to scale the image data. Software can also be used to scale the image data, but this requires additional processing capability.

### SUMMARY OF THE INVENTION

Methods and a system of adjusting the intensity of a pulse-width modulated digital display pixel, wherein each pixel is represented by an intensity word, and displayed sequentially for a duration dependent on the weight of the bit according to the claims are disclosed. According to one embodiment of the disclosed invention, the display duration of each bit of the intensity word is altered to either increase the duty cycle of the pixel, resulting in increased pixel brightness, or to decrease the duty cycle of the pixel, resulting in decreased pixel brightness the increase or decrease being performed by changing at least one of the at least one blanking periods to a bit set period. To adjust the contrast ratio of a digital display, the duration of some bits is increased while the duration of other bits is decreased. The disclosed methods and system have the advantage of being inexpensive and easy to implement.

In WO-A-92 12506 a method of gray-scale intensity adjustment is disclosed, in which the duty cycle of the pixel display time is altered by utilising an intensity word with a plurality of bits.

### BRIEF DESCRIPTION OF THE DRAWINGS

FIG. 1 is one example of timeline for typical 5-bit digital display using pulse-width modulation.

FIG. 2 is one example of a timeline for a typical 5-bit digital display having increased brightness according to a first embodiment of the present invention.

FIG. 3 is one example of a timeline for a typical 5-bit digital display having decreased brightness according to a second embodiment of the present invention.

FIG. 4 is one example of a timeline for a typical 5-bit digital display having increased contrast according to a third embodiment of the present invention.

FIG. 5 is one example of a timeline for a typical 5-bit digital display having decreased contrast according to a fourth embodiment of the present invention.

FIG. 6 is a schematic view of a display system according to the present invention.

### DETAILED DESCRIPTION OF THE PREFERRED EMBODIMENTS

The invention taught herein may be applied to any display system that uses pulse-width modulation to control the intensity of an image. For the purposes of explanation the following discussion will focus on the digital micromirror device (DMD) spatial light modulator (SLM). DMDs may be fabricated in several styles such as cantilever beam, flexure beam and torsion beam. This disclosure will concentrate on torsion beam DMDs as explained in U.S. Patent 5,061,049,"Spatial Light Modulator and Method", assigned to Texas Instruments Incorporated. Other display devices could be used including liquid crystal device (LCD) arrays and light emitting device (LED) arrays.

Each element of a digital display is only capable of producing two intensity levels, on and off. Pulse-width modulation is used in order to produce other levels or brightness. Pulse-width modulation alters the duty cycle of each pixel according tot he desired intensity of the pixel. The viewer's eye integrates the light from each pixel over time providing the different duty cycles with an appearance of different intensity levels. In a pulse-width modulation display system, the duty cycle for each is assigned a n-bit intensity word. The significance of each bit determines how long the bit will be displayed. For example, bit n is displayed twice as long as bit n-1. The length of time a given bit is displayed is determined by the bit's weight value, the frame period and the maximum duty cycle. Typically, all bits of one weight value are displayed simultaneously, followed by all bits of the next weight value.

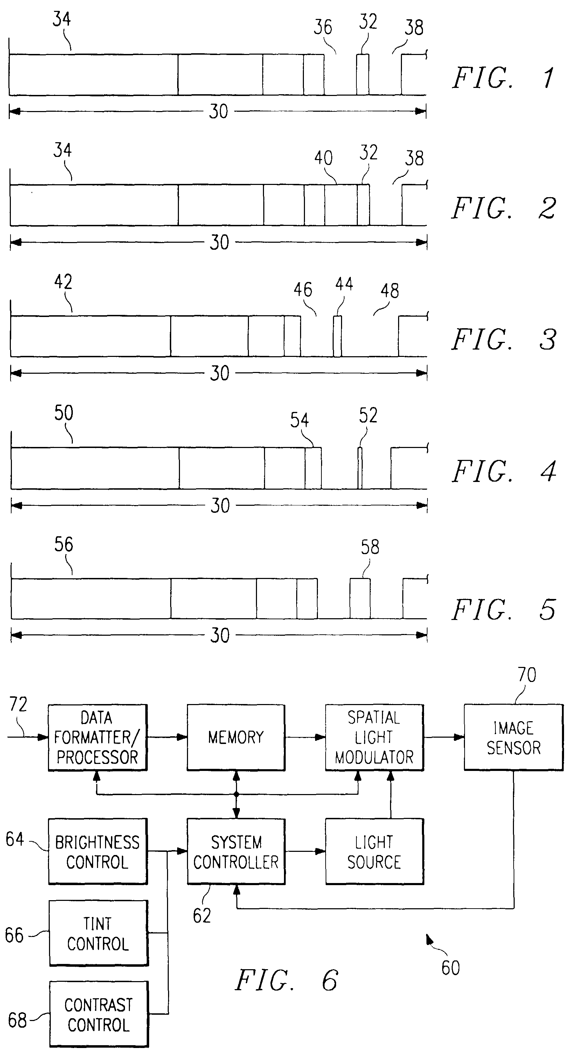

Figure 1 shows a typical timeline for one frame of a 5-bit digital pulse-width modulated display system. In Figure 1, the horizontal axis represents time and the vertical axis represents the pixels intensity, either on or off. A 5 bit system allows 32 unique intensities to be displayed. The selection of a 5-bit data word for the described embodiments is arbitrary, and was chosen for illustrative purposes. The invention may be implemented on display systems with any size data word having at least two bits. Typically an 8-bit data word is used for each color being displayed.

Frame period **30** is the time period required to load and display one 5-bit word of data on a DMD based display system. Bit period **32** is the display period for the LSB, bit 0, and bit period **34** is the display period for the MSB, bit 4. Although Figures 1 through 5 show the pixel being turned on for each bit period, this is done for purposes of illustration only, each bit period could be on or off independent of any other bit period. Because each element of a DMD contains a memory cell, DMDs are capable of being loaded with one bit while another bit is being displayed. This increases the maximum duty cycle of a DMD based display and reduces the bandwidth requirements of the DMD interface. When the display period for a bit is less than the time required to load the array, blanking periods are used. During a blanking period, each pixel is turned off while data for the next weight value is written tot he array. DMD arrays are typically designed to allow large groups of the mirrors to be rapidly set or cleared by writing a single data word to the array. This operation is called a block set or block clear.

Figure 1 shows two blanking periods **36**, and **38** during which the pixel is turned off. The duration of these periods is typically equal to the time required to load a frame of data into the display and may not be required on all display systems. Other display systems may have many more periods of blanking for each pixel. For example, on many LCD and LED systems, data is scanned into the display on a row by row basis one bit at a time. In this case the pixel is turned off between each bit period while the remaining rows of the display are driven.

The maximum brightness of an image is determined by how much light can be emitted, reflected, or transmitted by the display device in a given period of time. Brightness may be increased by increasing the duty cycle of the pixel. Prior art solutions relied on scaling the image data word thereby changing the value of the data word. A means to scale the data such as a multiplier or lookup table is usually required by the prior art solutions. This invention discloses a method of altering the brightness of a display that does not require scaling the image data. The disclosed method relies on altering the duty cycle for a pixel without changing the data word. One implementation is to increase the bit periods for each bit displayed. However, display systems are typically designed to maximize the duty cycle of a full-scale data value and the bit periods cannot be further increased without reducing the frame rate.

Blanking periods limit the duty cycle of each pixel in the display and therefore lower the maximum brightness capability of the display. According to one embodiment of this invention, display brightness may be increased by changing one or more of the block clear periods to block set periods. Figure 2 shows the timeline of a typical 5-bit having increased brightness according to a first embodiment of this invention. As shown, one block clear period **40** is now a block set time. If still greater brightness is required, the second block clear period **38** could be changed to a block set period. This method of increasing the brightness of a display has the disadvantage of being a rather large step increase in brightness, and the increase is not related to the desired brightness. To offset the large step increase, the weighted bit periods could be simultaneously reduced to achieve a more gradual increase in brightness. The method taught may also reduce the contrast ratio of the display. In color systems changing block resets to block sets may also tend to washout the true color of the image. However, despite the disadvantages, there are applications where increased brightness may be desirable to the viewer even if some artifacts are introduced.

In order to decrease the brightness of an image, the display period for one or more bits may be reduced. Figure 3 shows a typical 5-bit timeline according to a second embodiment of the present invention wherein the display period for each bit has been reduced by an amount equal to one-half LSB. Note that in Figure 3, block clear period **48** is now longer than the time required to load the display. While Figure 3 shows each bit reduced by the same amount, different reductions could be applied to each bit to achieve a similar effect. For example, in some applications, only the period of the LSB would be reduced. Other applications may reduce each period by a different amount. One method is to proportionally reduce each period to maintain the relative durations of each weight. When a bit period is reduced to less than the response time of the SLM, the bit is not displayed. Depending on the method used to reduce the periods, artifacts may be created.

Up to this point the examples have focused on a display system with a single intensity word, such as a monochrome display. The invention could also be applied to systems having at least two data words such as color systems having a separate data word for each color. When applied to color systems, the manipulation of the data word could be done equally to each color word, or certain colors could be manipulated differently to alter the tone of the displayed image.

Another display characteristic that may be controlled using the invention is the contrast ratio. In order to change the contrast ratio, some bit periods are increased while some are decreased. If the viewer desires to increase the contrast, the bit period of one or more of the MSBs is increased while the periods of one or more of the LSBs is decreased. This results in both increasing the brightness of the brighter pixels and decreasing the brightness of the lower intensity pixels. For example, if the MSB period is increased, the brightest half of all possible intensity words will increase. If the LSB period is decreased, then all odd intensity words will decrease. The decrease of the dimmest values will be the most noticeable.

Figure 4 shows a typical 5-bit timeline for a system with increased contrast according to a third embodiment of this invention. In Figure 4, the MSB period **50** has been increased while the two LSB bit periods **52** and **54** have been decreased. An alternative would be to simply decrease the bit periods of one or more of the LSBs. The bit periods of the MSBs could not be increased without decreasing the LSBs unless the system was designed to include extra blanking time within each frame.

To decrease the contrast ratio the opposite is done. Bit periods for the MSBs are decreased while the bit periods of the LSBs are increased. This decreases the brightness of the brightest pixels and increases the brightness of the dimmest pixels. Once again the MSBs could be decreased without increasing the LSBs in order to achieve the same effect. Figure 5 shows a timeline for a system with decreased contrast according to a fourth embodiment of the present invention. In Figure 5, the MSB period **56** has been decreased while the LSB period 58 has been increased.

In the previous discussion, the viewer adjusted the brightness, tint, and contrast of the image. An alternative is to allow the display system to automatically adjust the image. Figure 6 shows a display system **60** that may be adjusted by either the viewer or the system controller **62**. The viewer adjusts the image using the brightness control **64**, tint control **66**, and contrast control **68**. The system can determine when to adjust the image characteristics either by monitoring the image with the image sensor **70** or by processing the input data stream **72**. Color and contrast information may also be obtained for feedback to the system controller. The image sensor **70** may also be used to monitor ambient light to aid in determining the proper brightness level.

Thus, although there has been disclosed to this point a particular embodiment for a brightness and contrast control for a digital pulse-width modulated display system, it is not intended that such specific references be considered as limitations upon the scope of this invention except in-so-far as set forth in the following claims. Furthermore, having described the invention in connection with certain specific embodiments thereof, it is to be understood that further modifications may now suggest themselves to those skilled in the art, the scope of the invention being defined in the claims.

## Claims

1. A digital display system (60) comprising:
a digital display device for receiving a series of binary image data words and displaying an image representative of said data words, each said image data word comprised of at least two bits, each said bit in said image data words displayed sequentially for a display duration representative of the weight of said bit;
**characterized in** further comprising:
at least one input image modification signal representing a desired image contrast; and
a display system controller (62), said system controller (62) oppositely altering the display duration of at least two said bits based on said image modification signal.

2. The display system of claim 1 wherein said image modification signal is generated by a viewer.

3. The display system of claim 1 wherein said image modification signal is generated by an image sensor (70).

4. The display system of claim 1 wherein said display duration (32) of a first of said at least two bits is decreased (52) while said display duration (34) of a more significant of said at least two bits is increased (50).

5. The display system of claim 1 wherein said display duration (32) of a first of said at least two bits is increased (58) while said display duration (34) of a more significant of said at least two bits is decreased (56).

6. A method of adjusting the contrast of a pulse-width modulated digital pixel comprising:
representing said pixel with a binary-weighted intensity word having at least two bits;
sequentially displaying each of said at least two bits during a bit display duration representative of said bit's binary weight; and
**characterized by**
oppositely adjusting said bit display duration of at least two of said bits.

7. The method of claim 6 wherein said bit display duration (32) of a first of said at least two bits is decreased (52) while said bit display duration (34) of a more significant of said at least two bits is increased (50).

8. The method of claim 6 wherein said bit display duration (32) of a first of said at least two bits is increased (58) while said bit display duration (34) of a more significant of said at least two bits is decreased (56).

9. A method of adjusting the intensity of a pulse-width modulated digital display pixel comprising:
representing said pixel with an intensity word having at least two bits and at least one blanking period (36, 38);
sequentially displaying each of said at least two bits during a bit display duration representative of said bit's binary weight; and
**characterized by**
altering the intensity of said pixel by changing at least one (36) of said blanking periods (36, 38) to a bit set period (40).

## Patentansprüche

1. Digitales Anzeigesystem (60) mit:
einer digitalen Anzeigevorrichtung, die eine Reihe von binären Bilddatenwörtern empfängt und ein die Datenwörter darstellendes Bild anzeigt, wobei jedes Bilddatenwort wenigstens zwei Bits enthält, wobei nacheinander jedes Bit in den Bilddatenwörtern während einer Anzeigedauer, die das Gewicht des Bits darstellt, angezeigt wird;
dadurch gekennzeichnet, daß es ferner enthält:
wenigstens ein Eingangsbildmodifikationssignal, das einen gewünschten Bildkontrast darstellt; und
einen Anzeigesystem-Controller (62), der die Anzeigedauer von wenigstens zwei der Bits auf der Grundlage des Bildmodifikationssignals entgegengesetzt ändert.

2. Anzeigesystem nach Anspruch 1, wobei das Bildmodifikationssignal durch einen Betrachter erzeugt wird.

3. Anzeigesystem nach Anspruch 1, wobei das Bildmodifikationssignal durch einen Bildsensor (70) erzeugt wird.

4. Anzeigesystem nach Anspruch 1, wobei die Anzeigedauer (32) eines ersten der wenigstens zwei Bits erniedrigt (52) wird, während die Anzeigedauer (34) eines höherwertigeren Bits der wenigstens zwei Bits erhöht (50) wird.

5. Anzeigesystem nach Anspruch 1, wobei die Anzeigedauer (32) eines ersten der wenigstens zwei Bits erhöht (58) wird, während die Anzeigedauer (34) eines höherwertigeren der wenigstens zwei Bits erniedrigt (56) wird.

6. Verfahren zum Einstellen des Kontrasts eines impulsbreitenmodulierten digitalen Pixels, enthaltend:
Darstellen des Pixels durch ein Wort mit binär gewichteter Intensität, das wenigstens zwei Bits enthält;
aufeinanderfolgendes Anzeigen jedes der wenigstens zwei Bits während einer Bitanzeigedauer, die das binäre Gewicht des Bits darstellt, und
gekennzeichnet durch
entgegengesetztes Einstellen der Bitanzeigedauer von wenigstens zwei der Bits.

7. Verfahren nach Anspruch 6, wobei die Bitanzeigedauer (32) eines ersten der wenigstens zwei Bits erniedrigt (52) wird, während die Bitanzeigedauer (37) eines höherwertigeren der wenigstens zwei Bits erhöht (50) wird.

8. Verfahren nach Anspruch 6, wobei die Bitanzeigedauer (32) eines ersten der wenigstens zwei Bits erhöht (58) wird, während die Bitanzeigedauer (34) eines höherwertigeren der wenigstens zwei Bits erniedrigt (56) wird.

9. Verfahren zum Einstellen der Intensität eines impulsbreitenmodulierten digitalen Anzeigepixels, enthaltend:
Darstellen des Pixels durch ein Intensitätswort mit wenigstens zwei Bits und wenigstens einer Austastperiode (36, 38);
aufeinanderfolgendes Anzeigen jedes der wenigstens zwei Bits während einer Bitanzeigedauer, die das binäre Gewicht des Bits darstellt, und
gekennzeichnet durch
Ändern der Intensität des Pixel durch Ändern wenigstens einer (36) der Austastperioden (36, 38) in eine Bitsetzperiode (40).

## Revendications

1. Système numérique (60) d'affichage comprenant :
un dispositif numérique d'affichage pour recevoir une série de mots binaires de données d'image et afficher une image représentant lesdits mots de données, chacun desdits mots de données d'image étant composé d'au moins deux bits, chacun desdits bits dans lesdits mots de données d'image étant affiché séquentiellement pendant une durée d'affichage représentant le poids dudit bit;
caractérisé en ce qu'il comprend en outre :
au moins un signal de modification d'entrée d'image représentant un contraste souhaité d'image ; et
un dispositif de commande (62) de système d'affichage, ledit dispositif de commande (62) de système modifiant dans des sens opposés la durée d'affichage d'au moins deux desdits bits en se basant sur ledit signal de modification d'image.

2. Système d'affichage selon la revendication 1, dans lequel ledit signal de modification d'image est produit par un observateur.

3. Système d'affichage selon la revendication 1, dans lequel ledit signal de modification d'image est produit par un capteur d'image (70).

4. Système d'affichage selon la revendication 1, dans lequel ladite durée (32) d'affichage d'un premier desdits au moins deux bits est diminuée (52) tandis que ladite durée (34) d'affichage d'un bit de poids plus fort desdits au moins deux bits est augmentée (50).

5. Système d'affichage selon la revendication 1, dans lequel ladite durée (32) d'affichage d'un premier desdits au moins deux bits est augmentée (58) tandis que ladite durée (34) d'affichage d'un bit de poids plus fort desdits au moins deux bits est diminuée (56).

6. Procédé pour afficher le contraste d'un pixel numérique modulé en largeur d'impulsion, consistant à :
représenter ledit pixel par un mot d'intensité à pondération binaire ayant au moins deux bits ;
afficher séquentiellement chacun desdits au moins deux bits pendant une durée d'affichage de bit représentant le poids binaire dudit bit, et caractérisé par
un ajustement en sens opposés de ladite durée d'affichage de bit d'au moins deux desdits bits.

7. Procédé selon la revendication 6, dans lequel ladite durée (32) d'affichage de bit d'un premier desdits au moins deux bits est diminuée (52) tandis que ladite durée (34) d'affichage de bit d'un bit de poids plus fort desdits au moins deux bits est augmentée (50).

8. Procédé selon la revendication 6, dans lequel ladite durée (32) d'affichage de bit d'un premier desdits au moins deux bits est augmentée (58) tandis que ladite durée (34) d'affichage de bit d'un bit de poids plus fort desdits au moins deux bits est diminuée (56).

9. Procédé pour ajuster l'intensité d'un pixel d'affichage numérique modulé en largeur d'impulsion consistant à :
représenter ledit pixel par un mot d'intensité ayant au moins deux bits et au moins une période de suppression (36, 38) ;
afficher séquentiellement chacun desdits au moins deux bits pendant une durée d'affichage de bit représentant le poids binaire dudit bit, et caractérisé par une modification de l'intensité dudit pixel en changeant au moins une (36) desdites périodes de suppression (36, 38) en une période d'activation de bit (40).
